# EUROPEAN PATENT SPECIFICATION

(11) **EP 1 879 739 B1**
(45) Date of publication and mention of the grant of the patent: **17.05.2017**
(21) Application number: 06769769.8
(22) Date of filing: 23.02.2006
(51) Int. Cl.: B32B 7/02, B60R 13/02

(54) **PLASTIC PANELS WITH UNIFORM WEATHERING CHARACTERISTICS**
KUNSTSTOFFTAFELN MIT GLEICHEN WETTEREIGENSCHAFTEN
PANNEAUX EN PLASTIQUE POSSEDANT DES CARACTERISTIQUES UNIFORMES DE RESISTANCE AUX INTEMPERIES

(30) Priority: 23.02.2005 US 655552 P
(43) Date of publication of application: 23.01.2008
(73) Proprietor: Exatec, LLC., Wixom, MI 48393 (US)
(72) Inventor: LI, Chengtao, Novi, Michigan 48374 (US); SARGENT, Jonathan, Kingston, ON K7L 4K7 (CA); GASWORTH, Steven, M., Novi, Michigan 48374 (US); CHEN, Meng, Novi, Michigan 48377 (US)
(74) Representative: Patent- und Rechtsanwälte Dr. Solf & Zapf
(86) International application number: PCT/US2006/006523
(87) International publication number: WO 2006/121484

(56) References cited:
- WO-A-2006/066719
- WO-A-2006/102013
- WO-A-2007/058724
- WO-A-2007/076499
- US-A1- 2004 157 052
- US-A1- 2004 166 323
- US-B1- 6 635 342
- US-B1- 6 811 857

## Description

### TECHNICAL FIELD

The present invention relates to plastic panels for use in automobiles and other structures.

### BACKGROUND

Plastic materials, such as polycarbonate (PC) and polymethylmethyacrylate (PMMA), are currently being used in the manufacturing of numerous automotive parts and components, such as B-pillars, headlamps, and sunroofs. Automotive window modules represent an emerging application for these plastic materials because of various advantages in the areas of styling/design, weight savings, and safety/security. More specifically, plastic materials offer the automotive manufacturer the ability to reduce the complexity of the window assembly through the integration of functional components into the molded plastic module, as well as to distinguish their vehicle from a competitor's vehicle by increasing overall design and shape complexity. The use of light weight plastic window modules may facilitate both a lower center of gravity for the vehicle (better vehicle handling and safety) and improved fuel economy. Additionally, plastic window modules increase the overall safety of a vehicle by promoting the retention of occupants within the vehicle during a rollover accident. US 6,881,857 B1 discloses a plastic glazing sheet with added overmoulded plastic material. US 6,376,064 B1 discloses a layered article with improved microcrack resistance and method of making. US 2003/0072946 A1 discloses a polycarbonate automotive window panels with coating system blocking UV and IR radiation and providing abrasion resistant surface. US 4,533,595 A discloses abrasion-resistant resinous articles. US 4,395,461 A discloses a method for making silicon coated polycarbonates and article obtained therefrom. US 2004/0166323 A1 discloses weatherable multilayer articles and method for their preparation.

Although many advantages associated with implementing plastic windows are recognized, these plastic modules will not see wide scale commercialization until existing regulations (e.g., Title 49, Chapter 5, Part 571.205 of the Federal Motor Vehicle Standard No. 205; ANSI-Z26.1 American National Standards Institute - 1977) as established for glass windows are met. A summary of the minimum requirements established for using plastic windows in an automobile is provided in Table 1.

**Table 1**

| | *Requirement* | |
|---|---|---|
| Abrasion Resistance (Δ % haze) | ≤ 2.0 in front of B-pillar; ≤ 10.0 behind the B-pillar | |
| Optical Transmission (%) | ≥ 90.0% clear, ≥ 70.0 solar, ≥ 20% privacy | |
| Initial Haze (%) | ≤ 1.0 | |
| Coating Adhesion Retention (%) | 100 | |
| Lifetime (years in Florida or Arizona) | > 5 | |
| Color Change (Δ YI) | < 2.0 | |
| Impact Resistance | Ductile | |
| | | |

In order to meet the requirements as specified in Table 1, protective layers (e.g., coatings or films) must be applied to the plastic window module to overcome several limitations exhibited by plastic materials. These limitations include degradation caused by exposure to ultraviolet (UV) radiation as exemplified by a change in Yellowness Index (YI), decreased optical transmission, and enhanced embrittlement (decrease in impact resistance), as well as both limited Taber Abrasion Resistance and hydrolytic stability.

Premature failure of the protective layer system as indicated by delamination or adhesion loss will result in a limited lifetime for the plastic window module via the acceleration of the aforementioned degradation mechanisms. A darker color or tint of the plastic window (i.e. privacy (black) versus solar (green) or transparent (clear)) results in a higher interface temperature between the plastic window and the protective layer system, which tends to accelerate failure of the protective layer system. Frequently, a relatively thin weathering layer promotes the premature failure of the protective layer system. This same argument can be applied to the failure mechanism observed for other plastic components (e.g., molding, B-pillars, tailgate modules, body panels, etc.) of various colors protected with a weathering layer.

A silicone hard-coat system (e.g., SHP470 acrylic primer & AS4700 silicone hard-coat, GE Silicones, Waterford, New York) may have the potential to be a 10-year Florida equivalent weatherable system. However, a severe limit to the successful application of this system is the lack of coating thickness control for the weatherable acrylic primer and the silicone hard-coat. In areas of the window where the primer and/or silicone hard-coat are too thin, the predicted and observed weathering durability for the window can be much less than 10 years. If the primer level is too thick, then delamination and microcracking of the primer and/or silicone hard-coat will occur. Conventionally, SHP470 and AS4700 are applied by dip or flow coating processes. These processes, which are gravity controlled during film formation, yield a product exhibiting a gradient in coating thickness. More specifically, the coating layer formed at the top of the panel is thinner than the coating layer formed at the bottom of the panel. Given that weathering durability has been shown to be dependent upon the content of ultraviolet absorbing (UVA) material present in the cured coating, a variation in coating thickness that results in a variation in localized UVA content is undesirable. Therefore, there is a need in the industry to develop a protective layer system that will allow a plastic window module to meet automotive regulatory requirements for windows and to be robust against the occurrence of premature failure.

### BRIEF SUMMARY OF THE INVENTION

In overcoming the drawbacks and limitations of the known technologies, a plastic panel and method of application for vehicle windows is provided. The plastic panel comprises: a base layer; a weatherable film layer having a first and second surface, wherein the first surface of the film layer is adhered to the base layer; and an abrasion resistant layer adhered to the second surface of the weatherable film layer, wherein the weatherable film layer is a co-extruded film, an extrusion coated, a roller-coated or an extrusion-laminated film comprising multiple layers and contains an adhesion promoter additive to enhance adhesion between the second surface of the weatherable film layer and the abrasion resistant layer, is itself weatherable, blocks transmission of UV radiation sufficiently to protect the underlying base layer, and is suitable for FIM, IMD, extrusion, or lamination processing of a 3-dimensional shaped panel, and wherein the adhesion promoter additive is discrete silicone particles dispersed in the weatherable film layer; or wherein the adhesion promoter additive is a siloxane segment present in the backbone of a polymer selected from one of the group of an acrylic-, ionomer-, fluoro-, urethane-based polymers, or mixtures and copolymers thereof.

. The abrasion resistant layer is useful for protecting the weatherable film and base layers from damage caused by abrasion.

In other embodiments of the present invention, the plastic panel may include one or more adhesion promoting interlayers or functional layers in addition to a weatherable film layer and an abrasion resistant layer. The function of the adhesion promoting interlayer is to enhance adhesion between the weatherable layer and either the abrasion resistant layer or the base layer.

In another aspect of the present invention, a method for forming a plastic panel is disclosed that comprises: providing a weatherable film layer having a first and second surface; placing the film layer into the cavity of a mold so that the second surface of the weatherable film layer is facing towards the surface of the mold; forming a base layer by injecting a molten plastic resin into the cavity of the mold; adhering the first surface of the weatherable film layer to the base layer upon solidification of the base layer to form the plastic panel; removing the plastic panel from the mold; and applying an abrasion resistant layer to the second surface of the weatherable film layer useful for protecting the film and base layers from damage caused by abrasion. The abrasion resistant layer preferably being deposited using an expanding thermal plasma PECVD process.

### BRIEF DESCRIPTION OF THE FIGURES

FIGURE 1 is a cross-sectional view through a plastic panel, wherein the plastic panel has (A) a base layer, a weatherable film layer, and an abrasion resistant layer; (B) a base layer, a weatherable film layer with multiple sub-layers, and an abrasion resistant layer; and (C) a base layer, a weatherable film layer and an abrasion resistant layer with multiple sub-layers.
FIGURE 2 is a cross-sectional view through a plastic panel having a base layer, a weatherable film layer, and an abrasion resistant layer with (A) an adhesion promoting interlayer between the weatherable film layer and the abrasion resistant layer; (B) an adhesion promoting interlayer between the base layer and the weatherable film layer; and (C) an adhesion promoting interlayer between the weatherable film layer and both the base layer and the abrasion resistant layer.
FIGURE 3 is a cross-sectional view through a plastic panel having a base layer, a weatherable film layer, and an abrasion resistant layer with (A) a functional layer between the weatherable film layer and the abrasion resistant layer; (B) a functional layer between the base layer and the weatherable film layer; and (C) a functional layer between the weatherable film layer and both the base layer and the abrasion resistant layer, wherein the functional layer may further comprise multiple sub-layers.
FIGURE 4 is a process flow diagram illustrating a method for forming a plastic panel;
FIGURE 5 is a process flow diagram illustrating a method for forming a plastic panel; and
FIGURE 6 is a process flow diagram illustrating a method for forming a plastic panel.

### DETAILED DESCRIPTION

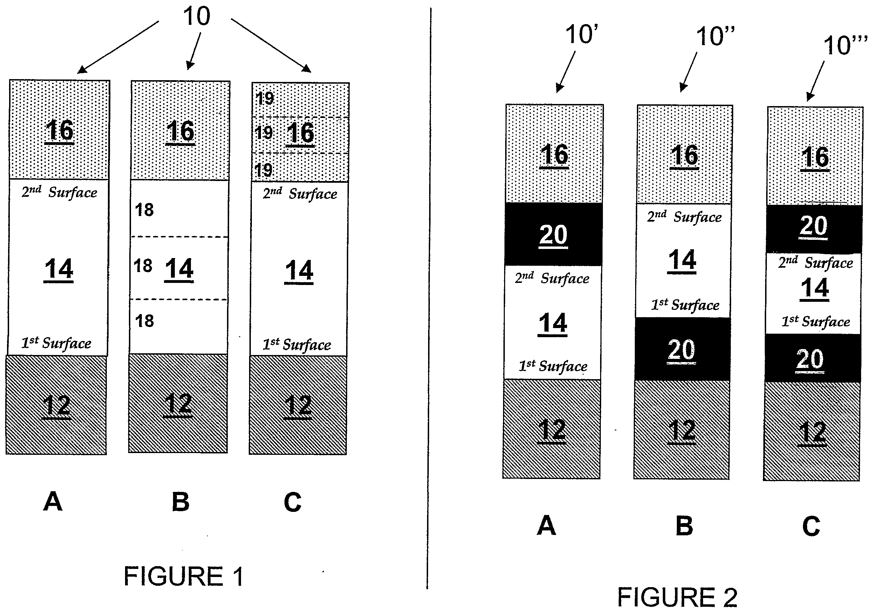

A plastic panel 10 for use as an automotive window module or glazing is illustrated in Figure 1. Panel 10 may utilize a combination of both protective coatings and protective films to meet the requirements set forth for automotive window systems. Further, as will be more fully described below, a weatherable film layer is incorporated in panel 10 having substantially uniform thickness, thereby, having uniform weathering characteristics over the entire panel.

In reference to Figure 1, plastic panel 10 comprises a base layer 12, a weatherable film layer 14 and an abrasion resistant layer 16. The weatherable film layer 14 has a first and a second surface, wherein the first surface is adhered to the base layer 12 and the second surface is adhered to the abrasion resistant layer 16. The abrasion resistant layer is useful for protecting the underlying weatherable film layer and base layer from damage caused by abrasion.

The base layer 12 comprises a thermoplastic resin, such as polycarbonate, acrylic, polyacrylate, polyester, polysulfone, or copolymers, or any other suitable transparent plastic material, or a mixture thereof. The base layer 12 may include polymethylmethacrylate (PMMA), polyester, bisphenol-A polycarbonate (PC) and other PC resin grades (such as branched or substituted) as well as being copolymerized or blended with other polymers, thereby, forming a blend with Acrylonitrile Butadiene Styrene (PC/ABS blend), or a polyester (PC/POLYESTER blend). The base layer may be either opaque or transparent. The base layer 12 may further comprise various additives, such as colorants, mold release agents, antioxidants, and ultraviolet absorbers.

The weatherable film layer 14 includes multiple sub-layers 18, as shown in Figure 1B. One of these sub-layers may be present only as a carrier for the weatherable layer by providing necessary support for the formation and structure of the weatherable film layer. This carrier sub-layer may be comprised of polycarbonate (PC), PMMA, polyesters, a PC/ABS blend, a PC/POLYESTER blend or mixtures and blends thereof. The weatherable portion of the weatherable film layer 14 may be comprised of an acrylic-, ionomer- fluoro-, urethane-, a siloxane-based polymer or a copolymer, mixture, or blend thereof. Preferably, the weatherable film layer 14 has a film thickness between about 10 and about 1250 micrometers. In one embodiment of the present invention, the weatherable film layer exhibits greater than 1 absorbance unit of Ultraviolet (UV) light absorption between the wavelengths of about 295 and about 345 nanometers. The weatherability of the weatherable film layer may be enhanced by the presence of ultraviolet absorbing molecules in the layer. Preferably, these UVA molecules will exhibit greater than 1 absorbance unit of Ultraviolet (UV) light absorption between the wavelengths of about 295 and about 345 nanometers. The UVA molecules may comprise one of or a combination of inorganic oxides, benzophenones, benzoylresorcinols, cyanoacrylates, triazines, oxanilides, and benzotriazoles.

PMMA, polyvinylidene fluoride (PVDF), polyvinyl fluoride (PVF) are weatherable polymers, and are thus candidates for a weatherable film layer. However, natural PMMA and PVDF or PVF are transparent to UV radiation and cannot protect the underlying PC substrate, a deficiency overcome by incorporating a UV absorber into the PMMA or PVDF OR PVF layer.

Commercially available UVAs, such as those available from Ciba Specialty Chemicals or GE Advanced Materials, which are sufficiently stable and photo efficient for UV protection, can be incorporated into a PMMA or PVDF OR PVF film or resin, as well as into other resins or films. Röhm & Haas or Atofina Chemicals' UVA chemical bond technology can also be used to inhibit the migration of the UVA from the weatheable film layer into another layer (e.g., base layer, abrasion resistant layer, etc.).

Moreover, the weatherable film layer 14 includes an adhesion promoter additive to enhance adhesion between the surface of the weatherable film layer and abrasion resistant layer 16. In one embodiment, the adhesion promoter additive is discrete silicone particles dispersed in the weatherable film layer 14. These silicone particles may be homogeneously dispersed through out the weatherable film layer or dispersed with a high concentration near the second surface of the weatherable film layer in order to optimize the adhesion of this layer to the abrasion resistant layer.

In another embodiment, the adhesion promoter additive is a polymeric siloxane segment present in the backbone of an acrylic-based polymer, an ionomer-based polymer, a fluoro-based polymer, an urethane-based polymer, and mixtures, blends, or copolymers thereof.

The abrasion resistant layer 16 may include a single layer or multiple sub-layers 19, as shown in Figure 1C. The abrasion resistant layer 16 may be comprised of aluminum oxide, barium fluoride, boron nitride, hafnium oxide, lanthanum fluoride, magnesium fluoride, magnesium oxide, scandium oxide, silicon monoxide, silicon dioxide, silicon nitride, silicon oxy-nitride, silicon oxy-carbide, hydrogenated silicon oxy-carbide, silicon carbide, tantalum oxide, titanium oxide, tin oxide, indium tin oxide, yttrium oxide, zinc oxide, zinc selenide, zinc sulfide, zirconium oxide, zirconium titanate, or a mixture or blend thereof. Preferably, the abrasion resistant layer 16 is comprised of a composition of SiOₓ or SiOₓC_{y}H_{z} depending upon the amount of carbon and hydrogen atoms that remain in the deposited layer. In this regard, the abrasion resistant layer 16 resembles a "glass-like" coating.

The abrasion resistant layer 16 may be applied by any deposition technique known to those skilled in the art, including but not limited to plasma-enhanced chemical vapor deposition (PECVD), expanding thermal plasma PECVD, plasma polymerization, photochemical vapor deposition, ion beam deposition, ion plating deposition, cathodic arc deposition, sputtering, evaporation, hollow-cathode activated deposition, magnetron activated deposition, activated reactive evaporation, thermal chemical vapor deposition, and any known sol-gel coating process. The abrasion resistant layer 16 may also comprise UVA molecules, such as but not limited to inorganic oxides, benzophenones, benzoylresorcinols, cyanoacrylates, triazines, oxanilides, and benzotriazoles.

With reference to Figure 2A, a schematic diagram of a cross-sectional view of a plastic panel 10' is illustrated. Plastic panel 10' includes the same or similar base layer 12, weatherable film layer 14 and abrasion resistant layer 16, as in the embodiments described above with respect to plastic panel 10. Additionally, plastic panel 10' includes an adhesion promoting interlayer 20 adhered to the second surface of the weatherable layer 14 to promote adhesion of this layer to the abrasion resistant layer 16. The adhesion promoting interlayer 20 is a polymer of the type that is cured by UV absorption, thermal absorption, condensation addition, thermally driven entanglement, or crosslinking by cationic or anionic species. Alternatively, the adhesion promoting interlayer 20 is made of acrylic-, ionomer-, fluoro-, urethane-, and/or siloxane-based polymers, copolymers, or mixtures or blends thereof.

Moreover, the adhesion promoting interlayer 20 may include an adhesion promoter additive to further enhance adhesion between the surface of the interlayer and the abrasion resistant layer 16. In one embodiment, the adhesion promoter additive is discrete silicone particles dispersed in the adhesion promoting interlayer 20. These silicone particles may be homogeneously dispersed through out the adhesion promoting interlayer or dispersed with a high concentration near the surface of the adhesion promoting interlayer in order to optimize the adhesion of this interlayer to the abrasion resistant layer.

In another embodiment, the adhesion promoter additive is a polymeric siloxane segment present in the backbone of an acrylic-based polymer, an ionomer-based polymer, a fluoro-based polymer, an urethane-based polymer, and mixtures, blends, or copolymers thereof. The adhesion promoting interlayer may also optionally comprise UVA molecules.

The inventors have observed surprisingly good (water-immersion) adhesion of an abrasion-resistant layer directly deposited to a PC/siloxane copolymer, p-CP endcapped [Chem. Abstr. Service Registry No. 202483-49-6], surface (e.g., EXL resin, GE Advanced Materials). More specifically, the inventors found that plastic panels passed 3 day water immersion tests (with a cross-hatch tape-pull test done before water immersion) for an abrasion resistant layer deposited on a PC/3.75% siloxane co-polymer adhesion promoting interlayer. The inventors also found that plastic panels passed 4 day Water Immersion tests when a PC/siloxane surface comprising 5% siloxane was used, and 1 day Water Immersion when the surface comprised 2.25% of a siloxane copolymer.

The inventors have demonstrated the formation of plastic panels using film insert molding (FIM) with PC/PMMA, PC/PVDF, and PC/PVF films. The adhesion and optical quality of the resulting plastic panels were found to be satisfactory. The inventors anticipate that the incorporation of a siloxane copolymer at modest levels into a PMMA, PVDF, PVF, POLYURETHANE (PU), or POLYESTER film will promote adhesion of a PECVD deposited "glass-like" coating to these films, as it did for a PC panel.

In yet another embodiment of the present invention the adhesion promoting interlayer is a coating comprising a resin selected from a polymer type that cures by UV absorption, thermal absorption, condensation addition, thermally driven entanglement, or cross-linking by cationic or anionic species. Preferred coatings include an acrylic coating, a polyurethane coating, or a silicone hard-coat. A variety of additives may be added to the coatings used as the adhesion promoting interlayer 20. These additives may include but not be limited to colorants (tints), rheological control agents, mold release agents, antioxidants, UVA molecules, and IR absorbing or reflecting pigments. The coatings that comprise the adhesion promoting interlayer may be applied by dip coating, flow coating, spray coating, curtain coating, in-mold coating, extrusion coating, or other techniques known to those skilled in the art.

As illustrated in Figure 2B, in yet another embodiment, the adhesion promoting interlayer 20 may be adhered to the first surface of the weatherable film 14 layer and the base layer 12 to form a plastic panel 10". Plastic panel 10" includes the same or similar characteristics or properties of the base layer 12, weatherable film layer 14 and abrasion resistant layer 16, as in the embodiments described above with respect to plastic panel 10 an 10'. In this embodiment, the adhesion promoting interlayer may also comprise polycarbonate (PC), PMMA, POLYESTER, PC/ABS blend, PC/POLYESTER blend or a mixture or blend thereof.

As shown in Figure 2C, two adhesion promoting interlayers 20 may be present with one interlayer adhered to the second surface of the weatherable film layer 14 and the abrasion resistant layer 16, while another adhesion promoting interlayer is adhered to the first surface of the weatherable film layer 14 to form plastic panel 10"'.

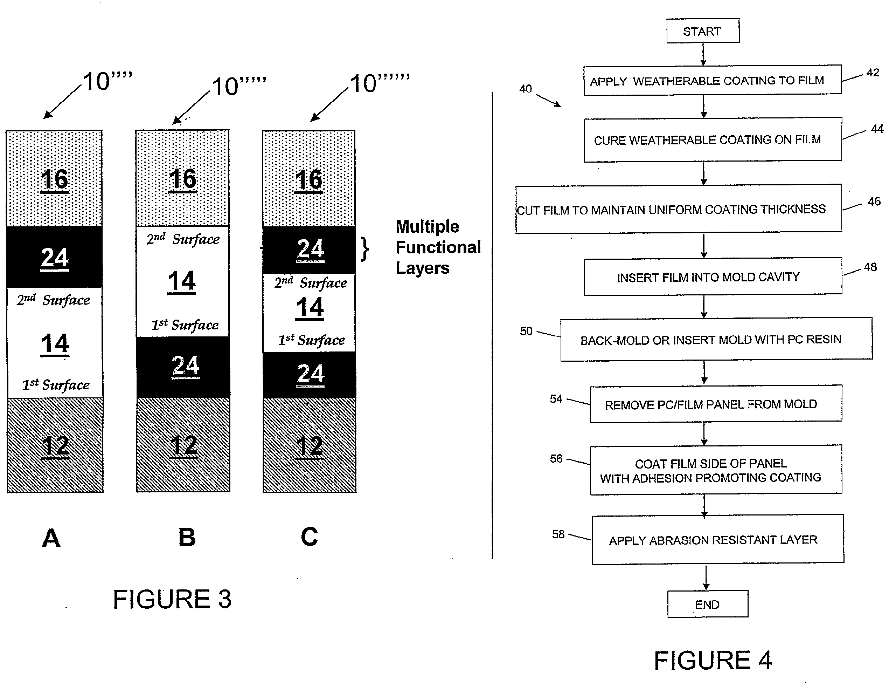

Figure 3 shows a plastic panel 10"". Plastic panel 10"" includes at least one functional layer 24. Functional layer 24 contains features or designs that may have specific functions to perform or used solely for aesthetic purposes. Functional layers 24 may perform one or a combination of the following functions including but not limited to solar control, defrosting, defogging, antenna, printed decoration, photochromatic light control, electrochromatic light control, and electroluminescence. More specifically, an antenna for radio reception may be formed in the functional layer 24 to provide a radio reception function. For aesthetic reasons certain areas of a window module may need to be blacked out; this may be accomplished in the functional layer 24 by providing an opaque material in the selected area. Functional layer 24 is a layer that may be directed to a specific function, for example, such as reducing infra-red transmissions through glazing 10"'. Moreover, functional layer 24 may have multiple layers to accomplish these functions.

In one embodiment, at least one functional layer 24 is located between the weatherable film layer 14 and the base layer 12 as shown in Figure 3A to form plastic panel 10"". In yet another embodiment, at least one functional layer 24 is located between the weatherable film layer 14 and the abrasion resistant layer 16 (Figure 3B) forming plastic panel 10""'. In still another embodiment as shown in Figure 3C, at least one functional layer is located between the weatherable film layer 14 and the base layer 12 and at least one functional layer 24 is located between the weatherable film layer 14 and the abrasion resistant layer 16 forming plastic panel 10""". Figure 3C further illustrates the possible occurrence of more than one or multiple functional layers 24 as part of the plastic panel.

A specific example of a plastic panel 10' made in accordance with one embodiment of the present invention, is a polycarbonate base layer incorporating a PC/PMMA film (e.g. TP5105 offered by Bayer Corporation, Pittsburgh PA or TP254 offered by Bayer AG, Germany) as the weatherable film layer 14 and then subsequently coated with a silicone hard-coat (i.e. AS4000, AS4700, or AS4010 offered by GE Silicones, Waterford, NY) to form adhesion promoting interlayer 20. Preferably, the PC/PMMA weatherable film layer 14 has a thickness of the weatherable component between 10 and 40 micrometers. The silicone hard-coat is an optional layer that acts as an adhesion promoting interlayer for the subsequent deposition of a "glass-like" abrasion resistant layer 16 using a expanding thermal plasma PECVD process. The adhesion of the aforementioned layers to the panel was found to pass exposure to a 10-day water immersion (65°C) test with no delamination and greater than 96% coating retention (cross-hatch test). The inventors did not observe the delamination of any layers upon exposure of the plastic panel for up to 15 megaJoules of ultraviolet (UV) light in an accelerated weathering test.

In another aspect of the present invention, methods for forming the plastic panels described in the various embodiments above are provided as described hereinafter. For example, in one Method 40, as shown in Figure 4, for constructing a plastic panel (i.e. 10 through 10"""), a weatherable film layer (i.e., film 14) is inserted into a cavity of a mold and back-molded or insert-molded with a polycarbonate resin. The film, for example, comprises a polycarbonate sub-layer that is horizontally flow-coated with SHP470 primer (SHP470 is offered by GE Silicones, Waterford, NY), as represented by Step 42, and fully cured according to the manufacturer's recommendations as represented by Step 44. The application of the acrylic primer or weatherable coating to the film can also be achieved through an extrusion, spray, or roller coating process in order to maintain an overall uniform thickness for the primer or weatherable coating, thereby, avoiding the coating wedge problem encountered with flow coating and dip coating. For some coating systems, spray coating may be the preferred method to obtain a uniform layer thickness. In this particular case, the SHP470 primer is thermally cured upon exposure to about 125°C for about 45 minutes. Preferably, at Step 46, the coated film is cut to maintain reasonable control over the primer's thickness. The weatherable film is then inserted into a mold cavity, at Step 48, and back molded or insert molded with a PC resin, as represented by Step 50. However, the present invention contemplates a method for forming a plastic panel starting with Step 48. In other words, the process steps represented by blocks 42, 44, and 46 are optional. In addition, other optional steps may be included, such as thermoforming the weatherable film layer to a shape substantially similar to one surface of the mold prior to placing the film in the mold in Step 48.

Upon removal from the mold, at Step 54, the side of the PC/film panel containing the exposed SHP470 primer is coated with a silicone hard-coat, AS4700, to form an adhesion promoting layer, as represented by Step 56. Finally, at Step 58, an abrasion resistant layer resembling a "glass-like" coating is applied through the use of a vacuum deposition method or a sol-gel coating technique.

The conventional application of a weatherable coating via flow or dip coating such as the SHP470 primer, results in a coating thickness gradient the magnitude of which may range from about 3 micrometers to greater than about 20 micrometers. The inventors have minimized this gradient by the application of the coating to an oversized plastic film followed by cutting off the peripheral of the film as described by Step 46 of method 40. The cutting off the peripheral of the film results in the elimination of the thinnest and thickest deposits of the SHP470 primer across the surface of the film. In the example described above the coating thickness of the SHP470 primer on the cut film is, preferably, about 4 to about 6 micrometers, as shown in Table 2 for Run #'s 1-4. The end result of limiting the variation in the thickness of the SHP470 primer across the surface of the film is the creation of a weatherable film layer providing substantially uniform weatherability over the entire plastic panel.

**Table 2**

| SHP470 Thickness Tested at Nine Locations Across the Surface of the Plastic Panel | | | | |
|---|---|---|---|---|
| | | Left | Center | Right |
| RUN #1 | Top | 5.88 µm | 5.51 µm | 5.71 µm |
| 022404G-001 | Middle | 5.05 µm | 5.80 µm | 6.11 µm |
| | Bottom | 4.93 µm | 6.19 µm | 6.04 µm |

| | | Left | Center | Right |
|---|---|---|---|---|
| RUN #2 | Top | 5.63 µm | 5.72 µm | 5.77 µm |
| 022404G-002 | Middle | 5.85 µm | 5.63 µm | 5.98 µm |
| | Bottom | 6.04 µm | 6.15 µm | 6.07 µm |

| | | Left | Center | Right |
|---|---|---|---|---|
| RUN #3 | Top | 5.40 µm | 4.84 µm | 4.40 µm |
| 022404G-003 | Middle | 5.33 µm | 4.92 µm | 4.41 µm |
| | Bottom | 5.47 µm | 5.03 µm | 4.41 µm |

| | | Left | Center | Right |
|---|---|---|---|---|
| RUN #4 | Top | 5.60 µm | 5.05 µm | 4.41 µm |
| 022404G-004 | Middle | 5.35 µm | 5.05 µm | 4.50 µm |
| | Bottom | 5.52 µm | 5.15 µm | 4.46 µm |

UV protection, as provided by films comprising a weatherable coating and being applied to a plastic panel via in-mold decorating (IMD) or film insert molding (FIM) processes must be capable of bonding to the plastic base layer (e.g., polycarbonate, etc.), as well as any subsequently deposited abrasion resistant layer or optional adhesion promoting interlayer or functional layers. Preferably, a weatherable coating may be uniformly applied directly to a low stress carrier sub-layer via extrusion, roll, or spray coating under clean room or clean line environmental conditions. The preferred thickness range achievable for the application of a weatherable coating by this approach is on the order of about 4 to about 6 micrometers. The weatherable films (i.e., film 14) can have various degrees of surface finishes in order to maximize light transmission and clarity. State-of-the-art films may comprise what is termed in the industry as polish/polish, fine matte/fine matte or polish/fine matte finishes for (side a)/(side b) of the films, respectively.

The coated film is fully cured by thermal treatment, UV light exposure, electron beam exposure, catalytically induced crosslinking, or by any other means known to those skilled in the art. An acrylic primer coated film may be used for film insert molding (FIM), and then subsequently coated with a silicone hard-coat interlayer for adhesion to an abrasion resistant "glass-like" layer via a vacuum deposition technique.

In one embodiment of the present invention, a specific type of PECVD process comprising an expanding thermal plasma reactor is preferred for the application of the abrasion resistant layer. This specific process (called hereinafter as an expanding thermal plasma PECVD process) is described in detail in US Patent Application serial number 10/881,949 (filed 06/28/2004) and US Patent Application serial number 11/075,343 (filed 03/08/2005), the entirety of both being hereby incorporated by reference. In an expanding thermal plasma PECVD process, a plasma is generated via applying a direct-current (DC) voltage to a cathode that arcs to a corresponding anode plate in an inert gas environment at pressures higher than 150 Torr, e.g., near atmospheric pressure. The near atmospheric thermal plasma then supersonically expands into a plasma treatment chamber in which the process pressure is less than that in the plasma generator, e.g., about 20 to about 100 mTorr.

The reactive reagent for the expanding thermal plasma PECVD process may comprise, for example, octamethylcyclotetrasiloxane (D4), tetramethyldisiloxane (TMDSO), hexamethyldisiloxane (HMDSO), or another volatile organosilicon compound. The organosilicon compounds are oxidized, decomposed, and polymerized in the arc plasma deposition equipment, typically in the presence of oxygen and an inert carrier gas, such as argon, to form an abrasion resistant layer.

The abrasion resistant layer may be deposited as multiple sub-layers exhibiting good adhesion between the sub-layers and to the underlying weatherable film layer. For example, a polycarbonate base layer having an overlying weatherable layer comprising an acrylic coating (Sun XP MWS) supplied by GE Plastics for Exatec LLC was subsequently coated with a "glass-like" abrasion resistant layer applied by an expanding thermal plasma PECVD process. In this particular example, the abrasion resistant layer was deposited as two sub-layers. The deposition parameters for each sub-layer, e.g., preheat temperature, arc current, and raw material flow rates, is provided in Table 3. The thickness of the abrasion layer was found to be relatively constant ranging between about 2.0 and 2.5 micrometers.

The adhesion between the deposited abrasion resistant layer and the weatherable layer was found to pass cross-hatch adhesion testing after 10-days of water immersion testing as shown in Table 3 for all Runs (#'s 5-10). The cross-hatch testing and water immersion (WI) testing was performed according to industry accepted procedures described in ASTM D3359-95 and ASTM D870, respectively.

**Table 3**

| RUN # | Preheat Temperature (°C) Set-Point | Parameters for Abrasion Resistant Layer 1^{st} Sublayer | Parameters for Abrasion Resistant Layer 2^{nd} Sublayer | Adhesion 10-day WI (% Retention) | Abrasion Layer Thickness (µm) |
|---|---|---|---|---|---|
| 5 | 350 | 40 amps, 0 sccm O₂; 100 sccm D₄ | 60 amps, 800 sccm O₂; 100 sccm D₄ | 100% | 1.99 |
| 6 | 350 | 40 amps, 300 sccm O₂; 100 sccm D₄ | 60 amps, 800 sccm O₂; 100 sccm D₄ | 100% | 1.92 |
| 7 | 350 | 60 amps, 300 sccm O₂; 100 sccm D₄ | 60 amps, 800 sccm O₂; 100 sccm D₄ | 100% | 2.47 |
| 8 | 300 | 50 amps, 150 sccm O₂; 100 sccm D₄ | 60 amps, 800 sccm O₂; 100 sccm D₄ | 100% | 2.38 |
| 9 | 350 | 60 amps, 0 sccm O₂; 100 sccm D₄ | 60 amps, 800 sccm O₂; 100 sccm D₄ | 100% | 2.43 |
| 10 | 250 | 60 amps, 0 sccm O₂; 100 sccm D₄ | 60 amps, 800 sccm O₂; 100 sccm D₄ | 100% | 2.48 |

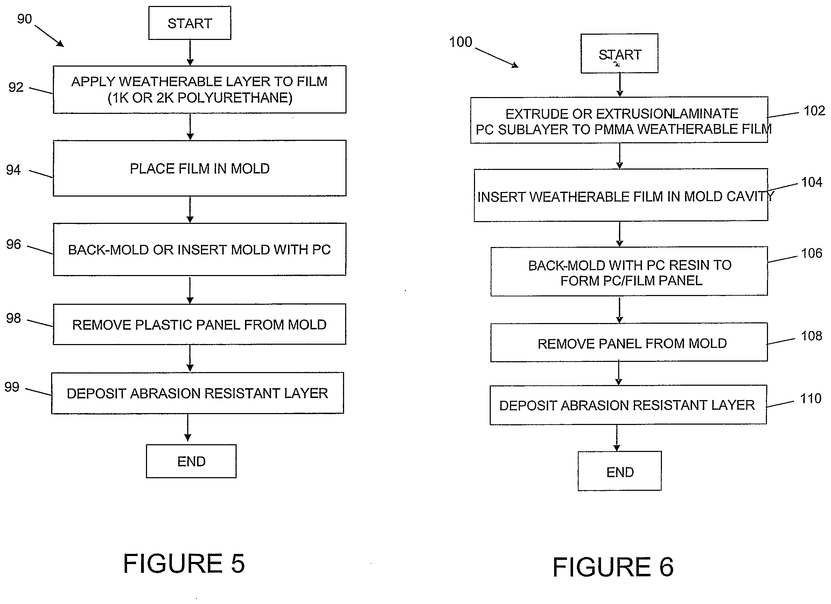

In yet another aspect of the invention a method 90 using one component (1 K) or plural component (2K) polyurethane (PU) coatings is provided for forming weatherable plastic panels, as illustrated in Figure 5. In a first step, as represented by Step 92, a PC film is coated with an aliphatic polyurethane (PU) coating, such as those offered by Pittsburgh Paint & Glass Inc. (PPG) as their Resilient^{®} family of coatings. Such coatings have shown superior weathering characteristics and abrasion resistance (e.g., Taber test, etc.). Advantageously, one component (1K) or plural component (2K) polyurethane (PU) coatings, such as PPG's Resilient® coatings, Fujikura Kasei's SC2603 (Japan), etc., are cost effective. A weatherable polyurethane coating may be applied via a co-extrusion, curtain, horizontal flow, or roller coating process onto a plastic film, such as polycarbonate (PC), with good control of coating thickness. The film is then inserted into a mold cavity, at Step 94, and back molded or insert molded with a PC resin, as represented by Step 96. The film and the resulting polycarbonate panel adhere to each other through melt bonding and are then removed from the mold, as represented by Step 98. Finally, as shown in Step 99 an abrasion resistant layer is deposited through the use of a vacuum deposition technique or a sol-gel coating process.

The inventors have demonstrated that a plastic panel formed using a PC/PU weatherable film and PC resin in an IMD or FIM process exhibit excellent weathering characteristics, good abrasion resistance, and superior adhesion performance.

Another embodiment allows for the elimination of the large and costly equipment required for the application of a "wet" coating, such as a primer/hard-coat system. When an UV protection film is applied to a plastic panel via an IMD, FIM, extrusion, or lamination process, the subsequent application of a hard-coat may only be necessary to either enhance the abrasion resistance of the plastic panel or act as an adhesion promoting interlayer for the deposition of a "glass-like" abrasion resistant layer. For some UV protection films, the direct application of a "glass-like" coating via PECVD with good adhesion and abrasion resistance is possible.

A co-extruded film, an extrusion coated, a roller-coated or an extrusion-laminated film comprising multiple layers (see Figure 2), may be used to eliminate the necessity of applying a specific hard-coat to act as an adhesion promoting interlayer provided the film (a) contains an additive or co-polymer that promotes adhesion of the weatherable layer to the abrasion-resistant layer; (b) is itself weatherable (e.g., acrylics [polymethylmethacrylate, PMMA], fluoropolymers [polyvinylidene fluoride, PVDF or polyvinyl fluoride, PVF], etc.); (c) blocks transmission of UV radiation sufficiently to protect the underlying base layer; and (d) is suitable for FIM, IMD, extrusion, or lamination processing of a 3-dimensional shaped panel. Preferably the UV absorbing constituents in the film are inhibited from migrating out of the layer. Furthermore, the weatherable component (e.g., not including the presence of any carrier sub-layer) in the weatherable film layer is preferred to be no thicker than about 100 micrometers so that the optical, thermal, and mechanical properties of the glazing system reflect primarily those of the bulk plastic.

A polycarbonate (PC) sub-layer may be co-extruded with, or extrusion-laminated to, the weatherable film layer or another functional layer as a carrier sub-layer. This transparent sub-layer assists in supporting the formation and structure of the weatherable layer or other functional layer, as well as optionally promoting the melt bonding between the weatherable film layer and the base layer during film insert molding. The carrier sub-layer may also accommodate any mismatch in T_{g} (glass transition temperature) and CTE (coefficient of thermal expansion) between the base layer and the weatherable film layer. The polycarbonate (PC) used as the carrier sub-layer within the weatherable or other functional layer to support the inclusion of additional functionality, such as a printed blackout/fade-out or defroster, may be Makrofol DE (Bayer AG, Germany) or similar, or Lexan 8010, 8A13F, T2F, T2FOQ graphics film (GE Advanced Materials) or similar.

Another example according to, Method 100 (see Figure 6) is provided by forming a plastic panel comprising a two-layer weatherable film layer. In this example the multi-component weatherable film layer as used in an IMD or FIM molding process is a two (2) layer TP5105 (optical grade, polish/polish finish, Bayer Corp., Pittsburgh) or TP254 (optical grade, polish/polish finish, Bayer AG, Germany) polycarbonate/PMMA thin film that is extrusion-laminated or co-extruded, as represented by Step 102. In this case, the polycarbonate is on the interior of the film, while the PMMA is on the exterior of film. The film is then inserted into a mold cavity, at Step 104, and back molded or insert molded with a PC resin (either LS2, GE Advanced Materials or Makrolon 2607, Bayer Corp.), as represented by Step 106. The film and the resulting polycarbonate panel adhere to each other through melt bonding and are then removed from the mold, as represented by Step 108. The TP254 film is highly loaded with UVA molecules in the weatherable component (PMMA). Finally, as represented by Step 110, an abrasion resistant layer is deposited on the film.

Plastic panels made by IMD, FIM, extrusion, or lamination processing can incorporate functionality in addition to weathering protection, such as solar control, defrosters, antennas, photochromics, electrochromics, and printed blackout/fadeout decoration, among other functionality. The resulting system can be used for automotive glazing, residential and commercial glazing, aircraft glazing, automotive headlamps and taillights, sunglasses, and similar applications. Certain functional layers may be prepared using screen printing, pad printing, membrane image transfer printing, transfer printing, ink jet printing, digital printing, robotic dispensing, mask and spray, or any other technique known to those skilled in the art of printing.

Different layers in a multi-layer film may comprise the various functionality described above, as well as different UV additives or IR additives. The inventors envision a viable approach of various layers being able to act as a screen against different spectral regions of light. Ideally, the additive in one layer would be incompatible or ineffective to migrate into an adjacent layer due to insolubility and other matrix effects.

## Claims

1. A plastic panel comprising:
a base layer;
a weatherable film layer having a first and second surface, wherein the first surface of the film layer is adhered to the base layer; and
an abrasion resistant layer adhered to the second surface of the weatherable film layer, wherein the abrasion resistant layer is useful for protecting the weatherable film and base layers from damage caused by abrasion, wherein the weatherable film layer is a co-extruded film, an extrusion coated, a roller-coated or an extrusion-laminated film comprising multiple layers and contains an adhesion promoter additive to enhance adhesion between the second surface of the weatherable film layer and the abrasion resistant layer, is itself weatherable, blocks transmission of UV radiation sufficiently to protect the underlying base layer, and is suitable for FIM, IMD, extrusion, or lamination processing of a 3-dimensional shaped panel, and
wherein the adhesion promoter additive is discrete silicone particles dispersed in the weatherable film layer; or
wherein the adhesion promoter additive is a siloxane segment present in the backbone of a polymer selected from one of the group of an acrylic-, ionomer-, fluoro-, urethane-based polymers, or mixtures and copolymers thereof.

2. The plastic panel of Claim 1, wherein the base layer is made of a material selected from the group of polycarbonate, polymethylmethyacrylate, polyester, a polycarbonate/acrylonitrile butadiene styrene blend, and a polycarbonate /polyester blend.

3. The plastic panel of Claim 1, wherein the weatherable film layer further comprises a material selected from a polymer type that cures by UV absorption, thermal absorption, condensation addition, thermally driven entanglement, or crosslinking by cationic or anionic species, or combination thereof.

4. The plastic panel of Claim 1, wherein the weatherable film layer is made of a material selected from the group of acrylic-, ionomer-, fluoro-, urethane-, siloxane-based polymers, or copolymers thereof.

5. The plastic panel of Claim 4, wherein the weatherable film layer is made of a mixture or blend of said polymers.

6. The plastic panel of Claim 1, wherein the weatherable film layer exhibits greater than about 1 absorbance unit of UV light absorption between the wavelengths of about 295 to about 345 nanometers.

7. The plastic panel of Claim 1, wherein the weatherable film layer further comprises ultraviolet absorbing (UVA) molecules.

8. The plastic panel of Claim 7, wherein the ultraviolet absorbing molecules exhibit greater than about 1 absorbance unit of UV light absorption between the wavelengths of about 295 to about 345 nanometers.

9. The plastic panel of Claim 7, wherein the UVA molecules are selected from the group of inorganic oxides, benzophenones, benzoylresorcinols, cyanoacrylates, triazines, oxanilides, and benzotriazoles.

10. The plastic panel of Claim 1, wherein the abrasion resistant layer comprises a material selected from the group of aluminum oxide, barium fluoride, boron nitride, hafnium oxide, lanthanum fluoride, magnesium oxide, scandium oxide, silicon monoxide, silicon dioxide, silicon nitride, silicon oxy-nitride, silicon oxy-carbide, hydrogenated silicon oxy-carbide, silicon carbide, tantalum oxide, titanium oxide, tin oxide, yttrium oxide, zinc oxide, zinc selenide, zinc sulphide, zirconium oxide, and zirconium titanate.

11. The plastic panel of Claim 1, wherein the abrasion resistant layer is deposited by one method selected from the group of plasma-enhanced chemical vapor deposition (PECVD), expanding thermal plasma PECVD, plasma polymerization, photochemical vapor deposition, ion beam deposition, ion plating deposition, cathodic arc deposition, sputtering, evaporation, hollow-cathode activated deposition, magnetron activated deposition, activated reactive evaporation, thermal chemical vapor deposition, and a sol-gel coating process.

12. The plastic panel of Claim 10, wherein the abrasion resistant layer further comprises ultraviolet absorbing molecules.

13. The plastic panel of Claim 1, wherein the plastic panel further comprises an adhesion promoting interlayer adhered to the second surface of the weatherable layer to promote adhesion of the abrasion resistant layer.

14. The plastic panel of Claim 13, wherein the adhesion promoting interlayer comprises a material selected from a polymer type that cures by UV absorption, thermal absorption, condensation addition, thermally driven entanglement, or crosslinking by cationic or anionic species.

15. The plastic panel of Claim 13, wherein the adhesion promoting interlayer is made of a material selected from the group of acrylic-, ionomer-, fluoro-, urethane-, siloxane-based polymers, or copolymers thereof.

16. The plastic panel of Claim 15, wherein the adhesion promoting layer further comprises discrete silicone particles dispersed in the interlayer.

17. The plastic panel of Claim 15, wherein the adhesion promoting interlayer is a polymer material further comprising siloxane segments present in the backbone of said polymer material.

18. The plastic panel of Claim 15, wherein the adhesion promoting interlayer is made of a mixture or blend of said polymers.

19. The plastic panel of Claim 14, wherein the adhesion promoting layer further comprises discrete silicone particles dispersed in the interlayer.

20. The plastic panel of Claim 14, wherein the adhesion promoting interlayer further comprises siloxane segments present in the backbone of a polymer material of the adhesion promoting interlayer.

21. The plastic panel of Claim 14, wherein the adhesion promoting interlayer is made of a mixture or blend of said polymers.

22. The plastic panel of Claim 13, wherein the adhesion promoting interlayer is selected as a material from the group of an acrylic coating, a polyurethane coating, or a silicon hard-coat.

23. The plastic panel of Claim 13, wherein the plastic panel further comprises a second adhesion promoting interlayer adhered to the first surface of the weatherable film layer and the base layer.

24. The plastic panel of Claim 23, wherein the second adhesion promoting interlayer is made of one selected from the group of acrylic-, ionomer-, fluoro-, urethane-, siloxane-based polymers, polycarbonate, PMMA, polyesters, a polycarbonate/ABS blend, a polycarbonate/polyester blend or mixtures and copolymers thereof.

25. The plastic panel of Claim 23, wherein the second adhesion promoting interlayer further comprises ultraviolet absorber molecules.

26. The plastic panel of Claim 22, wherein the adhesion promoting interlayer is applied by one method selected from the group of flow coating, dip coating, spray coating, in-mold coating, extrusion coating, or roller coating.

27. The plastic panel of Claim 13, wherein the adhesion promoting interlayer further comprises ultraviolet absorbing molecules.

28. The plastic panel of Claim 1, wherein the plastic panel further comprises an adhesion promoting interlayer adhered to the first surface of the weatherable film layer and the base layer.

29. The plastic panel of Claim 28, wherein the adhesion promoting interlayer is made of one selected from the group of acrylic-, ionomer-, fluoro-, urethane-, siloxane-based polymers, polycarbonate, PMMA, polyesters, a polycarbonate/ABS blend, a polycarbonate/polyester blend or mixtures and copolymers thereof.

30. The plastic panel of Claim 28, wherein the adhesion promoting interlayer further comprises ultraviolet absorbing molecules.

31. The plastic panel of Claim 28, wherein the plastic panel further comprises a second adhesion promoting interlayer adhered to the first surface of the weatherable layer and the base layer.

32. The plastic panel of Claim 31, wherein the second adhesion promoting interlayer is made of one selected from the group of acrylic-, ionomer-, fluoro-, urethane-, siloxane-based polymers, polycarbonate, PMMA, polyesters, a polycarbonate/ABS blend, a polycarbonate/polyester blend or mixtures and copolymers thereof.

33. The plastic panel of Claim 31, wherein the second adhesion promoting interlayer further comprises ultraviolet absorber molecules.

34. The plastic panel of Claim 1, wherein the weatherable film layer has a thickness of between about 10 and about 1250 micrometers.

35. The plastic panel of Claim 1, wherein the plastic panel further comprises at least one functional layer.

36. The plastic panel of Claim 35, wherein each functional layer is one selected from the group of solar control, defrosting, defogging, antenna, printed decoration, photochromatic light control, electrochromic, and electroluminescent layers.

37. The plastic panel of Claim 35, wherein at least one functional layer is located between the weatherable film layer and the base layer.

38. The plastic panel of Claim 35, wherein at least one functional layer is located between the weatherable film layer and the abrasion resistant layer.

39. The plastic panel of Claim 35, wherein at least one functional layer is located between the weatherable film layer and the base layer and at least one functional layer is located between the weatherable film layer and the abrasion resistant layer.

40. The plastic panel of Claim 1, wherein the abrasion resistant layer comprises multiple sub-layers differing in composition or structure.

41. A method for forming a plastic panel, the method comprising:
providing a weatherable film layer having a first and second surface, wherein the weatherable film layer is a co-extruded film, an extrusion coated, a roller-coated or an extrusion-laminated film comprising multiple layers and contains an adhesion promoter additive to enhance adhesion between the second surface of the weatherable film layer and the abrasion resistant layer, is itself weatherable, blocks transmission of UV radiation sufficiently to protect the underlying base layer, and is suitable for FIM, IMD, extrusion, or lamination processing of a 3-dimensional shaped panel, and wherein the adhesion promoter additive is discrete silicone particles dispersed in the weatherable film layer or wherein the adhesion promoter additive is a siloxane segment present in the backbone of a polymer selected from one of the group of an acrylic-, ionomer-, fluoro-, urethane-based polymers, or mixtures and copolymers thereof,
placing the film layer into a cavity of a mold so that the second surface of the weatherable film layer is facing a surface of the mold;
forming a base layer by injecting a molten plastic resin into the cavity of the mold;
securing the film layer to the base layer upon solidification of the base layer to form the plastic panel;
removing the plastic panel from the mold; and
applying an abrasion resistant layer to the second surface of the weatherable film layer useful for protecting the film and base layers from damage caused by abrasion.

42. The method of Claim 41, further comprising the preparing of the weatherable film layer by coating a carrier sub-layer with a weatherable coating.

43. The method of Claim 42, wherein the weatherable coating is applied to the carrier sub-layer using a method selected as one of spray coating, flow coating, dip coating, curtain coating, extrusion coating, in-mold coating, or roller coating.

44. The method of claim 41, further comprising cutting the film to fit into the mold cavity.

45. The method of claim 41, further comprising thermoforming the weatherable film layer to a shape substantially similar to one surface of the mold.

46. The method of claim 41, further comprising applying an abrasion resistant layer to the surface of the base layer opposite the weatherable film layer.

47. The method of Claim 46, wherein the abrasion resistant layer is deposited using a method selected as one of plasma-enhanced chemical vapor deposition (PECVD), expanding thermal plasma PECVD, plasma polymerization, photochemical vapor deposition, ion beam deposition, ion plating deposition, cathodic arc deposition, sputtering, evaporation, hollow-cathode activated deposition, magnetron activated deposition, activated reactive evaporation, thermal chemical vapor deposition, or a sol-gel coating process.

48. The method of Claim 47 wherein the abrasion resistant layer is deposited using an expanding thermal plasma PECVD process.

49. The method of Claim 41, wherein adhering the first surface of the weatherable film layer to the base layer further comprises applying an adhesion promoting interlayer to one of the first surface of the weatherable film layer and the base layer.

50. The method of Claim 41, wherein applying an abrasion resistant layer to the second surface of the weatherable film layer further comprises applying an adhesion promoting interlayer to one of to the second surface of the weatherable film layer and the abrasion resistant layer.

51. The method of Claim 41, further comprising applying two adhesion promoting interlayers with one adhering to the second surface of the weatherable film layer and the abrasion resistant layer and the other adhering to the first surface of the weatherable film layer and the base layer.

52. The method of Claim 45, wherein the adhesion promoting interlayer is a coating applied by spray coating, curtain coating, flow coating, dip coating, extrusion coating, in-mold coating, or roller coating.

53. The method of claim 45, further comprising providing a first functional layer on the film layer.

54. The method of Claim 53, wherein the step of applying an abrasion resistant layer to the plastic panel includes applying the abrasion resistant layer to the second surface of the film layer.

55. The method of Claim 53, wherein the step of providing the first functional layer on the film layer applies the first functional layer onto the first surface of the film layer.

56. The method of Claim 53, further comprising applying a second functional layer to the second surface of the film layer.

57. The method of Claim 56, wherein the step of applying an abrasion resistant layer to the plastic panel includes applying the abrasion resistant layer to the second functional layer.

58. The method of Claim 53, wherein the first functional layer is applied via screen printing, pad printing, membrane image transfer printing, transfer printing, ink jet printing, digital printing, robotic dispensing, or mask and spray.

59. The method of Claim 53, wherein the first functional layer is applied using a method selected as one of plasma-enhanced chemical vapor deposition (PECVD), expanding thermal plasma PECVD, plasma polymerization, photochemical vapor deposition, ion beam deposition, ion plating deposition, cathodic arc deposition, sputtering, evaporation, hollow-cathode activated deposition, magnetron activated deposition, activated reactive evaporation, thermal chemical vapor deposition, or a sol-gel coating process.

## Patentansprüche

1. Kunststoffplatte, umfassend:
eine Grundschicht;
eine witterungsbeständige Filmschicht mit einer ersten und einer zweiten Oberfläche, wobei die erste Oberfläche der Filmschicht an der Grundschicht haftet; und
eine abriebbeständige Schicht, die an der zweiten Oberfläche der witterungsbeständigen Filmschicht haftet, wobei die abriebbeständige Schicht geeignet ist zum Schützen der witterungsbeständigen Film- und der Grundschicht vor durch Abrieb verursachter Beschädigung, wobei die witterungsbeständige Filmschicht ein koextrudierter Film, ein extrusionsbeschichteter, ein walzenbeschichteter oder ein extrusionslaminierter Film ist, der mehrere Schichten aufweist und einen Haftförderer-Zusatzstoff enthält, um die Haftung zwischen der zweiten Oberfläche der witterungsbeständigen Filmschicht und der abriebbeständigen Schicht zu verstärken, selbst witterungsbeständig ist, Durchtreten von UV-Strahlung ausreichend blockiert, um die darunterliegende Grundschicht zu schützen, und für FIM-, IMD-, Extrusions- oder Laminationsverarbeitung einer 3-dimensional geformten Platte geeignet ist, und
wobei es sich bei dem Haftförderer-Zusatzstoff um diskrete Siliconpartikel handelt, die in der witterungsbeständigen Filmschicht dispergiert sind; oder
wobei der Haftförderer-Zusatzstoff ein Siloxansegment ist, das in der Hauptkette eines Polymers ausgewählt aus einem aus der Gruppe von Polymeren auf Acryl-, lonomer-, Fluor-, Urethan-Basis oder Gemischen oder Copolymeren davon vorhanden ist.

2. Kunststoffplatte gemäß Anspruch 1, wobei die Grundschicht aus einem Material ausgewählt aus der Gruppe von Polycarbonat, Polymethylmethacrylat, Polyester, einer Polycarbonat/Acrylnitril-Butadien-Styrol-Mischung und einer Polycarbonat/Polyester-Mischung besteht.

3. Kunststoffplatte gemäß Anspruch 1, wobei die witterungsbeständige Filmschicht ferner ein Material ausgewählt aus einem Polymertyp, der durch UV-Absorption, Wärmeabsorption, Kondensationsaddition, wärmegetriebener Verschlingung oder Vernetzung durch kationische oder anionische Spezies oder eine Kombination davon härtet, umfasst.

4. Kunststoffplatte gemäß Anspruch 1, wobei die witterungsbeständige Filmschicht aus einem Material ausgewählt aus der Gruppe von Polymeren auf Acryl-, lonomer-, Fluor-, Urethan-, Siloxan-Basis oder Copolymeren davon besteht.

5. Kunststoffplatte gemäß Anspruch 4, wobei die witterungsbeständige Filmschicht aus einem Gemisch oder einer Mischung genannter Polymere besteht.

6. Kunststoffplatte gemäß Anspruch 1, wobei die witterungsbeständige Filmschicht mehr als etwa 1 Absorptionseinheit an UV-Licht-Absorption zwischen den Wellenlängen von etwa 295 bis etwa 345 Nanometer aufweist.

7. Kunststoffplatte gemäß Anspruch 1, wobei die witterungsbeständige Filmschicht ferner Ultraviolett-absorbierende (UVA) Moleküle umfasst.

8. Kunststoffplatte gemäß Anspruch 7, wobei die Ultraviolett-absorbierenden Moleküle mehr als etwa 1 Absorptionseinheit an UV-Licht-Absorption zwischen den Wellenlängen von etwa 295 bis etwa 345 Nanometer aufweisen.

9. Kunststoffplatte gemäß Anspruch 7, wobei die UVA-Moleküle ausgewählt sind aus der Gruppe von anorganischen Oxiden, Benzophenonen, Benzoylresorcinolen, Cyanoacrylaten, Triazinen, Oxaniliden und Benzotriazolen.

10. Kunststoffplatte gemäß Anspruch 1, wobei die abriebbeständige Schicht ein Material ausgewählt aus der Gruppe von Aluminiumoxid, Bariumfluorid, Bornitrid, Hafniumoxid, Lanthanfluorid, Magnesiumoxid, Scandiumoxid, Siliciummonoxid, Siliciumdioxid, Siliciumnitrid, Siliciumoxynitrid, Siliciumoxycarbid, hydriertem Siliciumoxycarbid, Siliciumcarbid, Tantaloxid, Titanoxid, Zinnoxid, Yttriumoxid, Zinkoxid, Zinkselenid, Zinksulfid, Zirkonoxid und Zirkontitanat umfasst.

11. Kunststoffplatte gemäß Anspruch 1, wobei die abriebbeständige Schicht durch ein Verfahren ausgewählt aus der Gruppe von plasmaverstärkter chemischer Gasphasenabscheidung (PECVD), Expanding-Thermal-Plasma-PECVD, Plasmapolymerisation, photochemischer Gasphasenabscheidung, lonenstrahlabscheidung, Ionenplattieren, Kathoden-Bogenabscheidung, Sputtern, Aufdampfen, Hohlkathoden-aktivierter Abscheidung, Magnetron-aktivierter Abscheidung, aktiviertem reaktivem Aufdampfen, thermischer chemischer Gasphasenabscheidung und einem Sol-Gel-Beschichtungsverfahren abgeschieden ist.

12. Kunststoffplatte gemäß Anspruch 10, wobei die abriebbeständige Schicht ferner Ultraviolett-absorbierende Moleküle umfasst.

13. Kunststoffplatte gemäß Anspruch 1, wobei die Kunststoffplatte ferner eine haftfördernde Zwischenschicht umfasst, die an der zweiten Oberfläche der witterungsbeständigen Schicht haftet, um die Haftung der abriebbeständigen Schicht zu begünstigen.

14. Kunststoffplatte gemäß Anspruch 13, wobei die haftfördernde Zwischenschicht ein Material ausgewählt aus einem Polymertyp, der durch UV-Absorption, Wärmeabsorption, Kondensationsaddition, wärmegetriebener Verschlingung oder Vernetzung durch kationische oder anionische Spezies härtet, umfasst.

15. Kunststoffplatte gemäß Anspruch 13, wobei die haftfördernde Zwischenschicht aus einem Material ausgewählt aus der Gruppe von Polymeren auf Acryl-, lonomer-, Fluor-, Urethan-, Siloxan-Basis oder Copolymeren davon besteht.

16. Kunststoffplatte gemäß Anspruch 15, wobei die haftfördernde Schicht ferner diskrete Siliconpartikel umfasst, die in der Zwischenschicht dispergiert sind.

17. Kunststoffplatte gemäß Anspruch 15, wobei die haftfördernde Zwischenschicht ein Polymermaterial ist, das ferner Siloxansegmente umfasst, die in der Hauptkette des Polymermaterials vorhanden sind.

18. Kunststoffplatte gemäß Anspruch 15, wobei die haftfördernde Zwischenschicht aus einem Gemisch oder einer Mischung der Polymere besteht.

19. Kunststoffplatte gemäß Anspruch 14, wobei die haftfördernde Schicht ferner diskrete Siliconpartikel umfasst, die in der Zwischenschicht dispergiert sind.

20. Kunststoffplatte gemäß Anspruch 14, wobei die haftfördernde Zwischenschicht ferner Siloxansegmente umfasst, die in der Hauptkette eines Polymermaterials der haftfördernden Zwischenschicht vorhanden sind.

21. Kunststoffplatte gemäß Anspruch 14, wobei die haftfördernde Zwischenschicht aus einem Gemisch oder einer Mischung der Polymere besteht.

22. Kunststoffplatte gemäß Anspruch 13, wobei die haftfördernde Zwischenschicht als Material aus der Gruppe einer Acrylbeschichtung, einer Polyurethanbeschichtung und einer Silicium-Hartbeschichtung ausgewählt ist.

23. Kunststoffplatte gemäß Anspruch 13, wobei die Kunststoffplatte ferner eine zweite haftfördernde Zwischenschicht umfasst, die an der ersten Oberfläche der witterungsbeständigen Filmschicht und der Grundschicht haftet.

24. Kunststoffplatte gemäß Anspruch 23, wobei die zweite haftfördernde Zwischenschicht aus einem ausgewählt aus der Gruppe von Polymeren auf Acryl-, Ionomer-, Fluor-, Urethan-, Siloxan-Basis, Polycarbonat, PMMA, Polyestern, einer Polycarbonat/ABS-Mischung, einer Polycarbonat/Polyester-Mischung oder Gemischen und Copolymeren davon besteht.

25. Kunststoffplatte gemäß Anspruch 23, wobei die zweite haftfördernde Zwischenschicht ferner Ultraviolettabsorber-Moleküle umfasst.

26. Kunststoffplatte gemäß Anspruch 22, wobei die haftfördernde Zwischenschicht durch ein Verfahren ausgewählt aus der Gruppe von Fließbeschichten, Tauchbeschichten, Sprühbeschichten, In-Mold-Beschichten, Extrusionsbeschichten und Walzenbeschichten aufgebracht ist.

27. Kunststoffplatte gemäß Anspruch 13, wobei die haftfördernde Zwischenschicht ferner Ultraviolett-absorbierende Moleküle umfasst.

28. Kunststoffplatte gemäß Anspruch 1, wobei die Kunststoffplatte ferner eine haftfördernde Zwischenschicht umfasst, die an der ersten Oberfläche der witterungsbeständigen Filmschicht und der Grundschicht haftet.

29. Kunststoffplatte gemäß Anspruch 28, wobei die haftfördernde Zwischenschicht aus einem ausgewählt aus der Gruppe von Polymeren auf Acryl-, Ionomer-, Fluor-, Urethan-, Siloxan-Basis, Polycarbonat, PMMA, Polyestern, einer Polycarbonat/ABS-Mischung, einer Polycarbonat/Polyester-Mischung oder Gemischen und Copolymeren davon besteht.

30. Kunststoffplatte gemäß Anspruch 28, wobei die haftfördernde Zwischenschicht ferner Ultraviolett-absorbierende Moleküle umfasst.

31. Kunststoffplatte gemäß Anspruch 28, wobei die Kunststoffplatte ferner eine zweite haftfördernde Zwischenschicht umfasst, die an der ersten Oberfläche der witterungsbeständigen Schicht und der Grundschicht haftet.

32. Kunststoffplatte gemäß Anspruch 31, wobei die zweite haftfördernde Zwischenschicht aus einem ausgewählt aus der Gruppe von Polymeren auf Acryl-, lonomer-, Fluor-, Urethan-, Siloxan-Basis, Polycarbonat, PMMA, Polyestern, einer Polycarbonat/ABS-Mischung, einer Polycarbonat/Polyester-Mischung oder Gemischen und Copolymeren davon besteht.

33. Kunststoffplatte gemäß Anspruch 31, wobei die zweite haftfördernde Zwischenschicht ferner Ultraviolettabsorber-Moleküle umfasst.

34. Kunststoffplatte gemäß Anspruch 1, wobei die witterungsbeständige Filmschicht eine Dicke von zwischen etwa 10 und etwa 1250 Mikrometer aufweist.

35. Kunststoffplatte gemäß Anspruch 1, wobei die Kunststoffplatte ferner wenigstens eine Funktionsschicht umfasst.

36. Kunststoffplatte gemäß Anspruch 35, wobei jede Funktionsschicht eine ausgewählt aus der Gruppe von Sonnenschutz-, Enteisungs-, Antibeschlag-, Antennen-, gedruckten Dekorations-, photochromatischen Lichtschutz-, elektrochromen und elektrolumineszenten Schichten ist.

37. Kunststoffplatte gemäß Anspruch 35, wobei wenigstens eine Funktionsschicht zwischen der witterungsbeständigen Filmschicht und der Grundschicht angeordnet ist.

38. Kunststoffplatte gemäß Anspruch 35, wobei wenigstens eine Funktionsschicht zwischen der witterungsbeständigen Filmschicht und der abriebbeständigen Schicht angeordnet ist.

39. Kunststoffplatte gemäß Anspruch 35, wobei wenigstens eine Funktionsschicht zwischen der witterungsbeständigen Filmschicht und der Grundschicht angeordnet ist und wenigstens eine Funktionsschicht zwischen der witterungsbeständigen Filmschicht und der abriebbeständigen Schicht angeordnet ist.

40. Kunststoffplatte gemäß Anspruch 1, wobei die abriebbeständige Schicht mehrere Teilschichten umfasst, die sich in Zusammensetzung oder Struktur unterscheiden.

41. Verfahren zum Herstellen einer Kunststoffplatte, wobei das Verfahren umfasst:
Bereitstellen einer witterungsbeständigen Filmschicht, die eine erste und eine zweite Oberfläche aufweist, wobei die witterungsbeständige Filmschicht ein koextrudierter Film, ein extrusionsbeschichteter, ein walzenbeschichteter oder ein extrusionslaminierter Film ist, der mehrere Schichten umfasst und einen Haftförderer-Zusatzstoff enthält, um die Haftung zwischen der zweiten Oberfläche der witterungsbeständigen Filmschicht und der abriebbeständigen Schicht zu verstärken, selbst witterungsbeständig ist, Durchtreten von UV-Strahlung ausreichend blockiert, um die darunterliegende Grundschicht zu schützen, und für FIM-, IMD-, Extrusions- oder Laminationsverarbeitung einer 3-dimensionalen Formplatte geeignet ist, und wobei es sich bei dem Haftförderer-Zusatzstoff um diskrete Siliconpartikel handelt, die in der witterungsbeständigen Filmschicht dispergiert sind, oder wobei der Haftförderer-Zusatzstoff ein Siloxansegment ist, das in der Hauptkette eines Polymers ausgewählt aus einem aus der Gruppe von Polymeren auf Acryl-, lonomer-, Fluor-, Urethan-Basis oder Gemischen oder Copolymeren davon vorhanden ist,
Anordnen der Filmschicht in einem Hohlraum eines Formwerkzeugs, so dass die zweite Oberfläche der witterungsbeständigen Filmschicht einer Oberfläche des Formwerkzeugs zugewandt ist;
Bilden einer Grundschicht durch Einspritzen eines geschmolzenen Kunststoffharzes in den Hohlraum des Formwerkzeugs;
Fixieren der Filmschicht an der Grundschicht bei Erstarren der Grundschicht, um die Kunststoffplatte zu bilden;
Entnehmen der Kunststoffplatte aus dem Formwerkzeug; und
Aufbringen einer abriebbeständigen Schicht auf die zweite Oberfläche der witterungsbeständigen Filmschicht, die zum Schützen des Films und der Grundschicht vor durch Abrieb verursachter Beschädigung geeignet ist.

42. Verfahren gemäß Anspruch 41, ferner umfassend Herstellen der witterungsbeständigen Filmschicht durch Beschichten einer Träger-Unterschicht mit einer witterungsbeständigen Beschichtung.

43. Verfahren gemäß Anspruch 42, wobei die witterungsbeständige Beschichtung unter Verwendung eines Verfahrens ausgewählt als eines von Sprühbeschichten, Fließbeschichten, Tauchbeschichten, Vorhangbeschichten, Extrusionsbeschichten, In-Mold-Beschichten und Walzenbeschichten auf die Träger-Unterschicht aufgebracht wird.

44. Verfahren gemäß Anspruch 41, ferner umfassend Schneiden des Films, um in den Hohlraum des Formwerkzeugs zu passen.

45. Verfahren gemäß Anspruch 41, ferner umfassend Warmformen der witterungsbeständigen Filmschicht zu einer Form, die einer Oberfläche des Formwerkzeugs wesentlich ähnlich ist.

46. Verfahren gemäß Anspruch 41, ferner umfassend Aufbringen einer abriebbeständigen Schicht auf die Oberfläche der Grundschicht gegenüber der witterungsbeständigen Filmschicht.

47. Verfahren gemäß Anspruch 46, wobei die abriebbeständige Schicht mittels eines Verfahrens ausgewählt als eines von plasmaverstärkter chemischer Gasphasenabscheidung (PECVD), Expanding-Thermal-Plasma-PECVD, Plasmapolymerisation, photochemischer Gasphasenabscheidung, lonenstrahlabscheidung, Ionenplattieren, Kathoden-Bogenabscheidung, Sputtern, Aufdampfen, Hohlkathoden-aktivierter Abscheidung, Magnetron-aktivierter Abscheidung, aktiviertem reaktivem Aufdampfen, thermischer chemischer Gasphasenabscheidung und einem Sol-Gel-Beschichtungsverfahren abgeschieden wird.

48. Verfahren gemäß Anspruch 47, wobei die abriebbeständige Schicht unter Verwendung eines Expanding-Thermal-Plasma-PECVD-Verfahrens abgeschieden wird.

49. Verfahren gemäß Anspruch 41, wobei das Anhaften der ersten Oberfläche der witterungsbeständigen Filmschicht an die Grundschicht ferner Aufbringen einer haftfördernden Zwischenschicht auf eine von der ersten Oberfläche der witterungsbeständigen Filmschicht und der Grundschicht umfasst.

50. Verfahren gemäß Anspruch 41, wobei das Aufbringen einer abriebbeständigen Schicht auf die zweite Oberfläche der witterungsbeständigen Filmschicht ferner Aufbringen einer haftfördernden Zwischenschicht auf eine von der zweiten Oberfläche der witterungsbeständigen Filmschicht und der abriebbeständigen Schicht umfasst.

51. Verfahren gemäß Anspruch 41, ferner umfassend Aufbringen von zwei haftfördernden Zwischenschichten, wobei eine an die zweite Oberfläche der witterungsbeständigen Filmschicht und der abriebbeständigen Schicht gehaftet wird und die andere an die erste Oberfläche der witterungsbeständigen Filmschicht und die Grundschicht gehaftet wird.

52. Verfahren gemäß Anspruch 45, wobei die haftfördernde Zwischenschicht eine Beschichtung ist, die durch Sprühbeschichten, Vorhangbeschichten, Fließbeschichten, Tauchbeschichten, Extrusionsbeschichten, In-Mold-Beschichten oder Walzenbeschichten aufgebracht wird.

53. Verfahren gemäß Anspruch 45, ferner umfassend Bereitstellen einer ersten Funktionsschicht auf der Filmschicht.

54. Verfahren gemäß Anspruch 53, wobei der Schritt des Aufbringens einer abriebbeständigen Schicht auf die Kunststoffplatte Aufbringen der abriebbeständigen Schicht auf die zweite Oberfläche der Filmschicht umfasst.

55. Verfahren gemäß Anspruch 53, wobei der Schritt des Bereitstellens der ersten Funktionsschicht auf der Filmschicht die erste Funktionsschicht auf die erste Oberfläche der Filmschicht aufbringt.

56. Verfahren gemäß Anspruch 53, ferner umfassend Aufbringen einer zweiten Funktionsschicht auf die zweite Oberfläche der Filmschicht.

57. Verfahren gemäß Anspruch 56, wobei der Schritt des Aufbringens einer abriebbeständigen Schicht auf die Kunststoffplatte Aufbringen der abriebbeständigen Schicht auf die zweite Oberfläche der Funktionsschicht umfasst.

58. Verfahren gemäß Anspruch 53, wobei die erste Funktionsschicht durch Siebdruck, Tampondruck, Membran-Bildtransferdruck, Transferdruck, Tintenstrahldruck, Digitaldruck, robotisches Ausgeben oder Maskieren und Sprühen aufgebracht wird.

59. Verfahren gemäß Anspruch 53, wobei die erste Funktionsschicht unter Verwendung eines Verfahrens ausgewählt als eines von plasmaverstärkter chemischer Gasphasenabscheidung (PECVD), Expanding-Thermal-Plasma-PECVD, Plasmapolymerisation, photochemischer Gasphasenabscheidung, lonenstrahlabscheidung, Ionenplattieren, Kathoden-Bogenabscheidung, Sputtern, Aufdampfen, Hohlkathoden-aktivierter Abscheidung, Magnetron-aktivierter Abscheidung, aktiviertem reaktivem Aufdampfen, thermischer chemischer Gasphasenabscheidung und einem Sol-Gel-Beschichtungsverfahren aufgebracht wird.

## Revendications

1. Panneau en matière plastique comprenant :
une couche de base ;
une couche de film résistant aux intempéries ayant une première et une seconde surface, dans lequel la première surface de la couche de film est collée à la couche de base ; et
une couche résistant à l'abrasion collée à la seconde surface de la couche de film résistant aux intempéries, dans lequel la couche résistant à l'abrasion est utile pour protéger les couches de film résistant aux intempéries et de base contre les dommages causés par l'abrasion, dans lequel la couche de film résistant aux intempéries est un film coextrudé, un film appliqué par extrusion, par application au rouleau ou par extrusion-laminage comprenant de multiples couches et contient un additif favorisant l'adhérence pour améliorer l'adhérence entre la seconde surface de la couche de film résistant aux intempéries et la couche résistant à l'abrasion, est lui-même résistant aux intempéries, bloque la transmission du rayonnement UV suffisamment pour protéger la couche de base sous-jacente et convient pour le traitement par FIM, IMD, extrusion ou laminage d'un panneau façonné de manière tridimensionnelle, et dans lequel l'additif favorisant l'adhérence consiste en des particules de silicone discrètes dispersées dans la couche de film résistant aux intempéries ; ou
dans lequel l'additif favorisant l'adhérence est un segment de siloxane présent dans le squelette d'un polymère choisi parmi le groupe constitué des polymères à base d'acrylique, d'ionomère, de fluoro, d'uréthane ou de mélanges et de copolymères de ceux-ci.

2. Panneau en matière plastique selon la revendication 1, dans lequel la couche de base est constituée d'un matériau choisi dans le groupe constitué par le polycarbonate, le polyméthylméthacrylate, le polyester, un mélange de polycarbonate / acrylonitrile butadiène styrène et un mélange de polycarbonate / polyester.

3. Panneau en matière plastique selon la revendication 1, dans lequel la couche de film résistant aux intempéries comprend en outre un matériau choisi parmi un type de polymère qui durcit par absorption UV, par absorption thermique, par addition et condensation, par enchevêtrement entraîné thermiquement ou par réticulation par des espèces cationiques ou anioniques ou par une combinaison de ceux-ci.

4. Panneau en matière plastique selon la revendication 1, dans lequel la couche de film résistant aux intempéries est constituée d'un matériau choisi dans le groupe constitué des polymères à base d'acrylique, d'ionomère, de fluoro, d'uréthane, de siloxane ou des copolymères de ceux-ci.

5. Panneau en plastique selon la revendication 4, dans lequel la couche de film résistant aux intempéries est constituée d'un mélange ou d'une combinaison desdits polymères.

6. Panneau en matière plastique selon la revendication 1, dans lequel la couche de film résistant aux intempéries présente une absorption de lumière UV supérieure à environ 1 unité d'absorbance entre les longueurs d'onde d'environ 295 à environ 345 nanomètres.

7. Panneau en matière plastique selon la revendication 1, dans lequel la couche de film résistant aux intempéries comprend en outre des molécules absorbant les ultraviolets (UVA).

8. Panneau en matière plastique selon la revendication 7, dans lequel les molécules absorbant l'ultraviolet présentent une absorption de lumière UV supérieure à environ 1 unité d'absorbance entre les longueurs d'onde d'environ 295 à environ 345 nanomètres.

9. Panneau en matière plastique selon la revendication 7, dans lequel les molécules UVA sont choisies dans le groupe composé des oxydes inorganiques, des benzophénones, des benzoylresorcinols, des cyanoacrylates, des triazines, des oxanilides et des benzotriazoles.

10. Panneau en matière plastique selon la revendication 1, dans lequel la couche résistant à l'abrasion comprend un matériau choisi dans le groupe constitué par l'oxyde d'aluminium, le fluorure de baryum, le nitrure de bore, l'oxyde d'hafnium, le fluorure de lanthane, l'oxyde de magnésium, l'oxyde de scandium, le monoxyde de silicium, le dioxyde de silicium, le nitrure de silicium, l'oxynitrure de silicium, l'oxycarbure de silicium, l'oxycarbure de silicium hydrogéné, le carbure de silicium, l'oxyde de tantale, l'oxyde de titane, l'oxyde d'étain, l'oxyde d'yttrium, l'oxyde de zinc, le séléniure de zinc, le sulfure de zinc, l'oxyde de zirconium et titanate de zirconium.

11. Panneau en matière plastique selon la revendication 1, dans lequel la couche résistant à l'abrasion est déposée par un procédé choisi dans le groupe comprenant le dépôt chimique en phase vapeur amélioré par plasma (PECVD), le dépôt PECVD à plasma thermique en expansion, la polymérisation par plasma, le dépôt photochimique en phase vapeur, le dépôt par faisceau ionique, le dépôt par plaquage ionique, le dépôt par arc cathodique, le dépôt par pulvérisation, par évaporation, le dépôt activé par cathode creuse, le dépôt activé par un magnétron, l'évaporation réactive activée, le dépôt chimique thermique en phase vapeur et un procédé de revêtement sol-gel.

12. Panneau en matière plastique selon la revendication 10, dans lequel la couche résistant à l'abrasion comprend en outre des molécules absorbant les ultraviolets.

13. Panneau en matière plastique selon la revendication 1, dans lequel le panneau en matière plastique comprend en outre une couche intermédiaire favorisant l'adhérence collée à la seconde surface de la couche résistant aux intempéries pour favoriser l'adhérence de la couche résistant à l'abrasion.

14. Panneau en matière plastique selon la revendication 13, dans lequel la couche intermédiaire favorisant l'adhérence comprend un matériau choisi parmi un type de polymère qui durcit par absorption UV, par absorption thermique, par addition et condensation, par enchevêtrement entraîné thermiquement ou par réticulation par des espèces cationiques ou anioniques.

15. Panneau en matière plastique selon la revendication 13, dans lequel la couche favorisant l'adhérence est constituée d'un matériau choisi dans le groupe constitué des polymères à base d'acrylique, d'ionomère, de fluoro, d'uréthane et de siloxane, ou de leurs copolymères.

16. Panneau en matière plastique selon la revendication 15, dans lequel la couche favorisant l'adhérence comprend en outre des particules de silicone discrètes dispersées dans la couche intermédiaire.

17. Panneau en matière plastique selon la revendication 15, dans lequel la couche intermédiaire favorisant l'adhérence est un matériau polymère comprenant en outre des segments de siloxane présents dans le squelette dudit matériau polymère.

18. Panneau en matière plastique selon la revendication 15, dans lequel la couche intermédiaire favorisant l'adhérence est constituée d'un mélange ou d'une combinaison desdits polymères.

19. Panneau en matière plastique selon la revendication 14, dans lequel la couche favorisant l'adhérence comprend en outre des particules de silicone discrètes dispersées dans la couche intermédiaire.

20. Panneau en matière plastique selon la revendication 14, dans lequel la couche intermédiaire favorisant l'adhérence comprend en outre des segments de siloxane présents dans le squelette d'un matériau polymère de la couche intermédiaire favorisant l'adhérence.

21. Panneau en matière plastique selon la revendication 14, dans lequel la couche intermédiaire favorisant l'adhérence est constituée d'un mélange ou d'une combinaison desdits polymères.

22. Panneau en matière plastique selon la revendication 13, dans lequel la couche intermédiaire favorisant l'adhérence est choisie en tant que matériau issu du groupe constitué d'un revêtement acrylique, d'un revêtement de polyuréthane ou d'un revêtement dur de silicium.

23. Panneau en matière plastique selon la revendication 13, dans lequel le panneau en matière plastique comprend en outre une seconde couche intermédiaire favorisant l'adhérence collée à la première surface de la couche de film résistant aux intempéries et à la couche de base.

24. Panneau en matière plastique selon la revendication 23, dans lequel la seconde couche intermédiaire favorisant l'adhérence est constituée d'un polymère choisi dans le groupe constitué des polymères à base d'acrylique, d'ionomère, de fluoro, d'uréthane, de siloxane, du polycarbonate, du PMMA, des polyesters, d'un mélange de polycarbonate / ABS, d'un mélange de polycarbonate / polyester ou des mélanges et des copolymères de ceux-ci.

25. Panneau en matière plastique selon la revendication 23, dans lequel la seconde couche intermédiaire favorisant l'adhérence comprend en outre des molécules d'absorbeur des ultraviolets.

26. Panneau en matière plastique selon la revendication 22, dans lequel la couche intermédiaire favorisant l'adhérence est appliquée par un procédé choisi dans le groupe comprenant le revêtement par aspersion, le revêtement au trempé, le revêtement par pulvérisation, le revêtement en moule, le revêtement par extrusion ou le revêtement par application au rouleau.

27. Panneau en matière plastique selon la revendication 13, dans lequel la couche intermédiaire favorisant l'adhérence comprend en outre des molécules absorbant les ultraviolets.

28. Panneau en matière plastique selon la revendication 1, dans lequel le panneau en matière plastique comprend en outre une couche intermédiaire favorisant l'adhérence collée à la première surface de la couche de film résistant aux intempéries et à la couche de base.

29. Panneau en matière plastique selon la revendication 28, dans lequel la couche intermédiaire favorisant l'adhérence est constituée d'un matériau choisi parmi le groupe constitué des polymères à base d'acrylique, d'ionomère, de fluoro, d'uréthane, de siloxane, du polycarbonate, du PMMA, des polyesters, d'un mélange de polycarbonate / ABS, d'un mélange de polycarbonate / polyester ou des mélanges et des copolymères de ceux-ci.

30. Panneau en matière plastique selon la revendication 28, dans lequel la couche intermédiaire favorisant l'adhérence comprend en outre des molécules absorbant les ultraviolets.

31. Panneau en matière plastique selon la revendication 28, dans lequel le panneau en matière plastique comprend en outre une seconde couche intermédiaire favorisant l'adhérence collée à la première surface de la couche résistant aux intempéries et à la couche de base.

32. Panneau en matière plastique selon la revendication 31, dans lequel la seconde couche intermédiaire favorisant l'adhérence est constituée d'un matériau choisi dans le groupe constitué des polymères à base d'acrylique, d'ionomère, de fluoro, d'uréthane, de siloxane, du polycarbonate, du PMMA, des polyesters, d'un mélange de polycarbonate / ABS, d'un mélange de polycarbonate / polyester ou des mélanges et des copolymères de ceux-ci.

33. Panneau en matière plastique selon la revendication 31, dans lequel la seconde couche intermédiaire favorisant l'adhérence comprend en outre des molécules absorbant les ultraviolets.

34. Panneau en matière plastique selon la revendication 1, dans lequel la couche de film résistant aux intempéries a une épaisseur comprise entre environ 10 et environ 1250 micromètres.

35. Panneau en matière plastique selon la revendication 1, dans lequel le panneau en matière plastique comprend en outre au moins une couche fonctionnelle.

36. Panneau en matière plastique selon la revendication 35, dans lequel chaque couche fonctionnelle est une couche choisie dans le groupe constitué des couches de protection solaire, de dégivrage, de désembuage, d'antenne, de décoration imprimée, de contrôle photochromique de la lumière, électrochromiques et électroluminescentes.

37. Panneau en matière plastique selon la revendication 35, dans lequel au moins une couche fonctionnelle est située entre la couche de film résistant aux intempéries et la couche de base.

38. Panneau en matière plastique selon la revendication 35, dans lequel au moins une couche fonctionnelle est située entre la couche de film résistant aux intempéries et la couche résistant à l'abrasion.

39. Panneau en matière plastique selon la revendication 35, dans lequel au moins une couche fonctionnelle est située entre la couche de film résistant aux intempéries et la couche de base et au moins une couche fonctionnelle est située entre la couche de film résistant aux intempéries et la couche résistant à l'abrasion.

40. Panneau en matière plastique selon la revendication 1, dans lequel la couche résistant à l'abrasion comprend de multiples sous-couches de composition ou de structure différentes.

41. Procédé de formation d'un panneau en matière plastique, le procédé comprenant les étapes consistant à :
fournir une couche de film résistant aux intempéries ayant une première et
une seconde surface, dans lequel la couche de film résistant aux intempéries est un film coextrudé, un film appliqué par extrusion, par application au rouleau ou par extrusion-laminage comprenant de multiples couches et qui contient un additif favorisant l'adhérence pour améliorer l'adhérence entre la seconde surface de la couche de film résistant aux intempéries et la couche résistant à l'abrasion, est lui-même résistant aux intempéries, bloque la transmission du rayonnement UV suffisamment pour protéger la couche de base sous-jacente, et convient au traitement par FIM, IMD, extrusion ou laminage d'un panneau façonné de manière tridimensionnelle, et dans lequel l'additif favorisant l'adhérence consiste en des particules de silicone discrètes dispersées dans la couche de film résistant aux intempéries ou dans lequel l'additif favorisant l'adhérence est un segment de siloxane présent dans le squelette d'un polymère choisi parmi le groupe constitué des polymères à base d'acrylique, d'ionomère, de fluoro, d'uréthane ou de mélanges et de copolymères de ceux-ci,
placer la couche de film dans une cavité d'un moule de sorte que la seconde surface de la couche de film résistant aux intempéries fait face à une surface du moule ;
former une couche de base par injection d'une résine plastique fondue dans la cavité du moule ;
fixer la couche de film à la couche de base lors de la solidification de la couche de base pour former le panneau de matière plastique ;
retirer le panneau en plastique du moule ; et
appliquer une couche résistant à l'abrasion sur la seconde surface de la couche de film résistant aux intempéries, utile pour protéger le film et les couches de base contre les dommages causés par l'abrasion.

42. Procédé selon la revendication 41, comprenant en outre l'étape consistant à préparer la couche de film résistant aux intempéries par revêtement d'une sous-couche de support avec un revêtement résistant aux intempéries.

43. Procédé selon la revendication 42, dans lequel le revêtement résistant aux intempéries est appliqué à la sous-couche de support en utilisant un procédé choisi parmi le revêtement par pulvérisation, le revêtement par aspersion, le revêtement au trempé, le revêtement par application au rideau, le revêtement par extrusion, le revêtement en moule ou le revêtement par application au rouleau.

44. Procédé selon la revendication 41, comprenant en outre l'étape consistant à découper le film pour qu'il s'insère dans la cavité du moule.

45. Procédé selon la revendication 41, comprenant en outre l'étape consistant à thermoformer la couche de film résistant aux intempéries en une forme sensiblement similaire à une surface du moule.

46. Procédé selon la revendication 41, comprenant en outre l'étape consistant à appliquer une couche résistant à l'abrasion sur la surface de la couche de base opposée à la couche de film résistant aux intempéries.

47. Procédé selon la revendication 46, dans lequel la couche résistant à l'abrasion est déposée en utilisant un des procédés choisi parmi les procédés de dépôt chimique en phase vapeur amélioré par plasma (PECVD), de dépôt PECVD à plasma thermique en expansion, de polymérisation par plasma, de dépôt photochimique en phase vapeur, de dépôt par faisceau ionique, de dépôt par plaquage ionique, de dépôt par arc cathodique, de dépôt par pulvérisation, par évaporation, de dépôt activé par cathode creuse, de dépôt activé par un magnétron, d'évaporation réactive activée, de dépôt chimique thermique en phase vapeur, ou un procédé de revêtement sol-gel.

48. Procédé selon la revendication 47, dans lequel la couche résistant à l'abrasion est déposée en utilisant un procédé de dépôt PECVD à plasma thermique en expansion.

49. Procédé selon la revendication 41, dans lequel l'étape consistant à faire adhérer la première surface de la couche de film résistant aux intempéries à la couche de base comprend en outre l'étape consistant à appliquer une couche intermédiaire favorisant l'adhérence à la première surface de la couche de film résistant aux intempéries ou à la couche de base.

50. Procédé selon la revendication 41, dans lequel l'étape consistant à appliquer une couche résistant à l'abrasion sur la seconde surface de la couche de film résistant aux intempéries comprend en outre l'étape consistant à appliquer une couche intermédiaire favorisant l'adhérence à la seconde surface de la couche de film résistant aux intempéries ou à la couche résistant à l'abrasion.

51. Procédé selon la revendication 41, comprenant en outre l'étape consistant à appliquer deux couches intermédiaires favorisant l'adhérence, l'une adhérant à la seconde surface de la couche de film résistant aux intempéries et à la couche résistant à l'abrasion et l'autre adhérant à la première surface de la couche de film résistant aux intempéries et à la couche de base.

52. Procédé selon la revendication 45, dans lequel la couche intermédiaire favorisant l'adhérence est un revêtement appliqué par pulvérisation, par application au rideau, un revêtement par aspersion, un revêtement au trempé, un revêtement par extrusion, un revêtement en moule ou un revêtement par application au rouleau.

53. Procédé selon la revendication 45, comprenant en outre l'étape consistant à fournir une première couche fonctionnelle sur la couche de film.

54. Procédé selon la revendication 53, dans lequel l'étape consistant à appliquer une couche résistant à l'abrasion sur le panneau en matière plastique comprend l'étape consistant à appliquer la couche résistant à l'abrasion sur la seconde surface de la couche de film.

55. Procédé selon la revendication 53, dans lequel l'étape consistant à fournir la première couche fonctionnelle sur la couche de film comprend l'application de la première couche fonctionnelle sur la première surface de la couche de film.

56. Procédé selon la revendication 53, comprenant en outre l'étape consistant à appliquer une seconde couche fonctionnelle à la seconde surface de la couche de film.

57. Procédé selon la revendication 56, dans lequel l'étape consistant à appliquer une couche résistant à l'abrasion sur le panneau en matière plastique comprend l'étape consistant à appliquer la couche résistant à l'abrasion sur la seconde couche fonctionnelle.

58. Procédé selon la revendication 53, dans lequel la première couche fonctionnelle est appliquée par sérigraphie, impression par tampon, impression par transfert de l'image par membrane, impression par transfert, impression par jet d'encre, impression numérique, distribution robotisée ou masquage et pulvérisation.

59. Procédé selon la revendication 53, dans lequel la première couche fonctionnelle est appliquée en utilisant un des procédés choisi parmi les procédés de dépôt chimique en phase vapeur amélioré par plasma (PECVD), de dépôt PECVD à plasma thermique en expansion, de polymérisation par plasma, de dépôt photochimique en phase vapeur, de dépôt par faisceau ionique, de dépôt par plaquage ionique, de dépôt par arc cathodique, de dépôt par pulvérisation, par évaporation, de dépôt activé par cathode creuse, de dépôt activé par un magnétron, d'évaporation réactive activée, de dépôt chimique thermique en phase vapeur, ou un procédé de revêtement sol-gel.
